Europäisches Patentamt

European Patent Office

Office européen des brevets

(19)

(11) Publication number: **0 023 154**
**B1**

# EUROPEAN PATENT SPECIFICATION

(12)

(45) Date of publication of patent specification: **23.11.83**

(51) Int. Cl.³: **G 02 B 5/16**

(21) Application number: **80302477.7**

(22) Date of filing: **22.07.80**

(54) Optical fibres cable and method of manufacturing it.

(30) Priority: **23.07.79 GB 7925558**

(43) Date of publication of application:
**28.01.81 Bulletin 81/4**

(45) Publication of the grant of the patent:
**23.11.83 Bulletin 83/47**

(84) Designated Contracting States:
**AT DE FR GB IT NL SE**

(56) References cited:
**DE - A - 2 635 979**
**DE - B - 2 651 725**
**FR - A - 2 404 236**
**GB - A - 1 438 074**
**GB - A - 1 453 402**
**GB - A - 1 457 868**
**GB - A - 1 461 151**
**GB - A - 1 461 540**
**GB - A - 1 487 464**
**US - A - 3 985 483**

(73) Proprietor: **PIRELLI GENERAL plc**
**40 Chancery Lane**
**London WC2A 1JH (GB)**

(72) Inventor: **Osterfield, John Richard**
**51 Peverills Wood Avenue Chandlers Ford**
**Eastleigh Hants. (GB)**
Inventor: **Collis, Robert Edwin**
**8 Dorset Road Chandlers Ford**
**Eastleigh Hants. (GB)**
Inventor: **Norman, Stephen Roy Cobbetts Meade**
**Little Shore Lane**
**Bishops Waltham Hants. (GB)**
Inventor: **Beltrami, Antonio Francesco**
**20 Via Borgonuovo**
**20121 Milan (IT)**

(74) Representative: **Milhench, Howard Leslie et al,**
**A.A. Thornton & Co. Northumberland House**
**303/306 High Holborn**
**London, WC1V 7LE (GB)**

Courier Press, Leamington Spa, England.

Optical fibres cable and method of manufacturing it

This invention relates to an optical fibres cable and a method of making it.

G.B. patent specification 1 487 464 to Industrie Pirelli S.p.A. describes and claims an optical fibre element for an optical fibres cable, wherein one or more optical fibres, each bare or provided with a protective sheath, is or are enclosed within an over-size tube which is such a loose fit around the optical fibre or fibres to permit movement of the fibre or fibres transverse to that tube. A preferred feature is that the optical fibres each follows a path, from end-to-end of the enclosing tube, which is longer than the enclosing sheath itself. This particularly enables tension to be applied to the cable, for example during installation by pulling the cable into a duct, without subjecting the individual optical fibres themselves to excessive tension.

This invention relates to an optical fibres cable, comprising one or more optical fibres freely and loosely enclosed within a unitary tube, which tube comprises a reinforcing element in the form of a steel tape wrapped longitudinally into a tubular form around the fibre or fibres and a sheath of plastics material extruded over said tubular reinforcing element. Such a cable is disclosed in one embodiment of G.B. patent specification 1 461 151: the arrangement is in fact complex, the unitary tube consisting of a first, thin-walled extrusion applied loosely over the fibres, then the metal tape which is an open-mesh (i.e. perforated) tape, and finally another thin-walled extrusion applied over the metal tape tube so that the two extruded layers become bonded together (through the perforations in the metal tape) to form a single tube with the metal tape embedded therein. It is said that the metal tape may be formed from steel wire. G.B. specification 1 461 540 (relating to a patent of addition to G.B. patent 1 461 151) discloses the same and equally complex arrangement, except that instead of the open-mesh metal tape, use is made of an open-mesh braid or open-mesh tape of polyethyleneterephthalateglycol or fibre glass.

G.B. specification 1 453 402 discloses an optical fibre cable in which the optical fibres are stranded around a central strength member, and then enclosed within a tube formed by wrapping a metal/plastics laminate tape so that its edges extend parallel to the axis of the tube and over-lap: an extruded over-sheath bonds to the outwardly-facing plastics face of the metal tape. The metal of this metal/plastics tape is an aluminium foil and the purpose of the arrangement is solely to act as a moisture barrier: the aluminium foil lacks the strength required to give any protection to the fibres upon the application of longitudinal tension, and indeed the teaching of G.B. specification 1 453 402 is to employ other means to provide the cable with its longitudinal strength, namely the central strength element and outer layers of armouring.

The optical fibres cable of the present invention is characterised in that the steel tape is imperforate and is pre-coated with a plastics material over at least that side which faces outwardly in the tubular reinforcing element (4), in that the steel tape is wrapped so that its longitudinal edges extend parallel to the axis of the tube and overlap, in that the plastics sheath (5) is bonded to the steel tape (over its said outwardly facing side) by said pre-coating of plastics material, and in that a liner tube (3), about which the unitary tube is formed, is disposed loosely around the optical fibre or fibres (1) and is formed from a paper or plastics or paper/plastics laminate strip.

The present invention also provides a method of making this cable, which method is defined in claim 2.

This cable is of simple but effective structure. The steel tape provides tensile strength to protect the optical fibres from excessive tension in the cable and protects the fibres against transverse compressive forces, but the cable retains good flexibility. The bonding between the extruded sheath and the steel tape tube prevents the steel tape kinking inwards, with possible damage to the fibres, upon bending the cable. Moreover, as an important additional feature the steel tape, being imperforate and bonded to the extruded sheath, provides an effective moisture barrier. The liner tube prevents any possible damage to the optical fibre or fibres from the inwardly facing edge of the steel tape.

An embodiment of this invention will now be described, by way of example only, with reference to the accompanying drawings in which:

Figure 1 is a view of an end portion of an optical fibres cable, the various layers of which are shown removed progressively in order to illustrate the features of construction; and

Figure 2 is a view of a portion of an apparatus for manufacturing the cable, showing means for positive feeding of the optical fibres and a paper tape being applied to form a loose tube about the optical fibres.

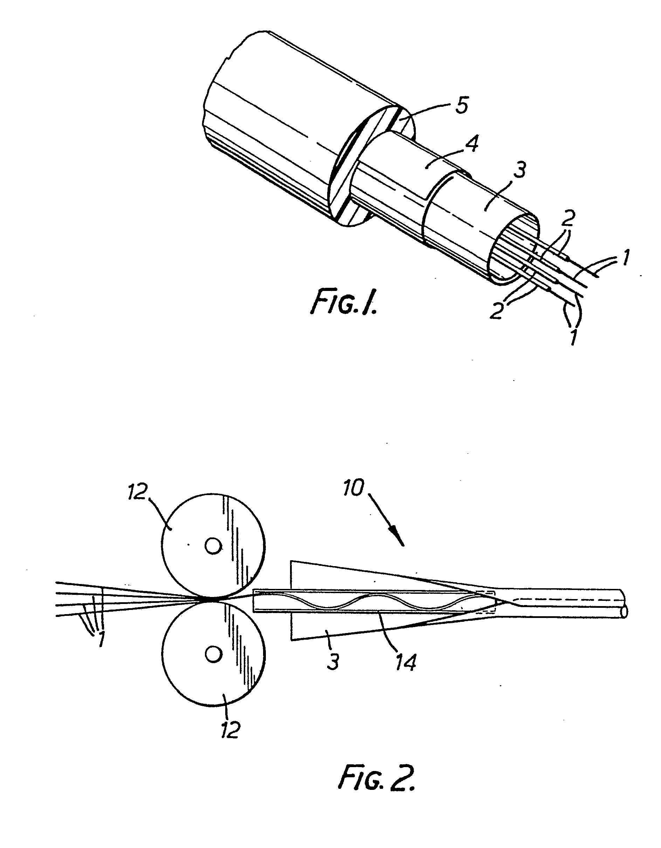

The particular embodiment of cable shown in Figure 1 comprises four optical fibres 1, but may instead comprise six, eight, twelve or in general any number of such fibres. The fibres may be of monomode or multimode construction and are provided with individual sheaths 2 of plastics material and the sheathed fibres are loosely enclosed within a tube 3 which comprises a belt in the form of a paper strip wrapped into tubular form with its opposite edges extending parallel to the axis of the tube thus formed and overlapping as shown. A reinforcing tube 4 is provided around the paper tube 3 and comprises a steel tape wrapped into tubular form with its opposite edges extending parallel to the axis of the tube thus formed and overlapping as shown. The overlap of the edges of the steel tape is generally diametrically opposite the overlap of the edges of the paper strip. The steel tape is coated on both sides with a thermoplastics material, of the order of 40 microns thick only, and one such tape is marketed by Dow Chemicals. An extruded sheath 5 of plastics material is applied over the steel tape tube 4 and bonds to the coating on the outwardly facing side of the steel tape so as to effect a bond between the sheath 5 and the steel tape tube. Also, the heat of extrusion causes the overlapping edges of the steel tape to become sealed together by a fusing of the contacting regions of the thermoplastics coatings.

The steel tape provides appropriate tensile strength so as to protect the fibres from excessive tension in the completed cable, but also protects the fibres against transverse crushing or compressive forces. However, the cable construction retains good flexibility. The bonded combination of steel tape tube 4 and outer sheath 5 provides an effective moisture barrier and the bond of the steel tape tube to the outer sheath prevents the steel tape kinking inwards, and possibly damaging the optical fibres, upon bending the cable. The paper strip tube 3 prevents any possible damage to the optical fibres from the inwardly facing edge of the steel tape. The plastics coating on the inwardly facing side of the steel tape provides corrosion protection for the steel itself.

In manufacturing the cable (Figure 2), the optical fibres 1 are fed, from individual bobbins on which they are wound, through a first station 10 at which the paper strip 3 is applied longitudinally from a reel (not shown) and wrapped around the fibres, then through a second station (not shown) at which the steel tape is applied longitudinally from a reel and wrapped around the paper strip tube, and then through an extruder at which the outer sheath 5 is applied. Finally, the cable issuing from the apparatus is wound upon a cable drum. Means are provided, just upstream of the first station, in the form of co-operating drive rolls 12 having rims of soft material (or alternatively in the form of a caterpillar device), to positively feed the optical fibres to the first station at a rate somewhat greater than the rate at which the paper tube, steel tube and outer sheath issue from the apparatus. Without this positive feed on the optical fibres, the cable would be wound onto the take-up drum with the optical fibres lying against what is, as wound on the drum, the radially-inner surface of the enclosing tube, with the result that the optical fibres would in fact be shorter than the overall length of the enclosing tube. Although obviously the cable could then be unwound from the drum and laid out straight for the fibres to relax, then cutting off the excess length of the enclosing tube, it is clearly an advantage to provide the positive feed of the fibres, so as to ensure an excess length of optical fibres within the enclosing tube, in order to avoid additional manufacturing operations. The cable shown is made by employing sufficient positive feed of the fibres that, even if the cable were laid out straight, the optical fibres follow respective paths, from end-to-end of the enclosing tube, which are each longer than the length of the enclosing tube itself. This cable is thus constructed in accordance with a preferred feature of British patent 1 487 464 to Industrie Pirelli S.p.A. For example, the optical fibres are typically 0.5% longer than the enclosing tube.

A tube 14, preferably transparent, for example of glass, extends from immediately downstream of the rolls 12 to the point where the folding of the paper tape 3 into tubular form is just completed. The optical fibres pass through the tube 14 and the paper tape is folded around the tube 14, which guides the excess length of the optical fibres into the paper tube. Moreover, although the optical fibres are only 0.5%, for example, longer than the enclosing tube, the undulating path adopted by the fibres is visible through the transparent wall of the tube and this provides a convenient means for checking that the optical fibres are being fed into the paper tube under the correct conditions.

Instead of the tube 3 being formed of a paper strip, it may be formed of a plastics strip or alternatively of a paper/plastics laminate strip wrapped so that the plastics ply faces inwardly.

**Claims**

1. An optical fibres cable, comprising one or more optical fibres freely and loosely enclosed within a unitary tube, which tube comprises a reinforcing element in the form of a steel tape wrapped longitudinally into a tubular form around the fibre or fibres and a sheath of plastics material extruded over said tubular reinforcing element, characterised in that the steel tape is imperforate and is pre-coated with a plastics material over at least that side which faces outwardly in the tubular reinforcing element (4), in that the steel tape is wrapped so that its longitudinal edges extend parallel to the axis of the tube and overlap, in that the plastics sheath (5) is bonded to the steel tape (over its said outwardly facing side) by said pre-coating of plastics material, and in that a liner tube (3), about which the unitary tube is formed, is disposed loosely around the optical fibre or fibres (1) and is formed from a paper or plastics or paper/plastics laminate strip.

2. A method of forming an optical fibres cable which cable comprises one or more optical fibres freely and loosely enclosed within a unitary tube, said method comprising forming the unitary tube by wrapping a steel tape longitudinally around said fibre or fibres to form a tubular reinforcing element and by extruding a sheath of plastics material over said tubular reinforcing element, said method being characterised in that said steel tape is imperforate and is pre-coated with a plastics material over at least one side, in that said steel tape is applied with its said one side facing outwardly and such that its longitudinal edges extend parallel to the axis of the tube and overlap, in that the heat of extrusion of said sheath (5) over said steel tape tube causes fusing of said pre-coating to bond said sheath to said steel tape, and in that a liner tube (3) is formed loosely around said fibre or fibres, prior to application of said unitary tube, by wrapping a paper or plastics or paper/plastics laminate strip into tubular form.

## Patentansprüche

1. Optisches Faserkabel mit einer oder mehreren optischen Fasern, welche frei und lose in einem gemeinsamen Rohr eingeschlossen ist bzw. sind, wobei das Rohr ein Verstärkungselement in Form eines in Längsrichtung um die Faser oder Fasern herum rohrförmig eingerollten Sathlbands und eine über das rohrförmige Verstärkungselement extrudierts Hülle aus Kunststoff aufweist, dadurch gekennzeichnet, daß das Stahlband keine Durchbrüche oder Perforationen aufweist und wenigstens an der bei dem rohrförmigen Verstärkungselement (4) auswärts gewandten Seite mit einem Kunststoff vorbeschichtet ist, daß das Stahlband so eingerollt ist, daß seine Längsränder parallel zur Achse des Rohrs verlaufen und einander überlappen, daß die Kunststoffhülle (5) durch die Vorbeschichtung aus Kunststoff (an der auswärts gewandten Seite) des Stahlbands stoffschlüssig mit diesem verbunden ist, und daß eine Auskleidungsrohr (3), um welches herum des gemeinsame Rohr geformt ist, die optische Faser oder Fasern (1) lose umgibt und aus einem Band aus Papier, aus Kunststoff oder aus einem Papier/Kunststofflaminat geformt ist.

2. Verfahren zum Herstellen eines optischen Faserkabels, welches eine oder mehrere frei und lose in einem gemeinsamen Rohr eingeschlossene optische Fasern aufweist, bei welchem das gemeinsame Rohr geformt wird, indem ein Stahlband in Längsrichtung um die Faser oder Fasern herum eingeroltl wird, so daß ein rohrförmiges Verstärkungselement entsteht, und indem eine Hülle aus Kunststoff über das rohrförmige Verstärkungselement extrudiert wird, dadurch gekennzeichnet, daß das Stahlband keine Durchbrechungen oder Perforationen aufweist und an wenigstens einer Seite mit einem Kunststoff vorbeschichtet ist, daß das Stahlband so angeordnet wird, daß die genannte eine Seite auswärts gewandt ist und daß seine Längsränder parallel zur Achse des Rohrs verlaufen und einenander überlappen, daß die Extrusionswärme beim Extrudieren der Hülle (5) über das Stahlbandrohr das Schmelzen der Vorbeschichtung bewirkt, um die Hülle stoffschlüssig mit dem Stahlband zu beschichten, und daß vor dem Aufbringen des gemeinsamen Rpohrs ein Auskleidungsrohr (3) lose um die Faser oder Fasern herum gefomrt wird, indem ein Band aus Papier, aus Kunststoff oder aus einem Papier-Kunststofflaminat zu einer rohrförmigen Gestalt eingerollt wird.

## Revendications

1. Câble à fibres optiques, comprenant une ou plusieurs fibres optiques disposées librement et de manière lâche dans un tube enveloppe commun d'un seul tenant, qui comporte un élément de renfort sous forme d'un ruban d'acier disposé longitudinalement sous une forme tubulaire autour de la fibre ou des fibres, ainsi qu'une gaine en matière plastique extrudée par-dessus cet élément de renfort tubulaire, caractérisé en ce que le ruban d'acier n'est pas perforé et a été recouvert préalablement d'une matière plastique sur au moins le côté dirigé vers l'extérieur sur l'élément de renfort tubulaire (4), que le ruban d'acier est enroulé de manière que ses bords longitudinaux soient parallèles à l'axe du tube et se recouvrent, que la gaine de plastique (5) est liée au ruban d'acier (audit côté dirigé vers l'extérieur) par ledit revêtement de plastique appliqué préalablement, et qu'un tube fourreau (3), autour duquel est formé le tube d'un seul tenant, est disposé de manière lâche autour de la fibre optique, ou autour des fibres optiques (1), et est formé d'une bande de papier, de plastique ou d'un complexe papier/plastique.

2. Procédé pour produire un câble à fibres optiques comprenant une ou plusieurs fibres optiques disposées librement et de manière lâche dans un tube enveloppe d'un seul tenant, selon lequel on forme le tube d'un seul tenant en enroulant un ruban d'acier longitudinalement autour de la fibre ou autour des fibres pour former un élément tubulaire de renfort et on extrude une gaine de matière plastique par-dessus cet élément tubulaire de renfort, caractérisé en ce que le ruban d'acier n'est pas perforé et a été recouvert préalablement d'une matière plastique sur au moins un côté, en ce que le ruban d'acier est appliqué avec ledit côté dirigé vers l'extérieur et de manière que ses bords longitudinaux s'étendent parallèlement à l'axe du tube et se recouvrent mutuellement, en ce que la chaleur développée par l'extrusion de la gaine (5) par-dessus le ruban d'acier provoque la fusion du revêtement plastique appliqué préalablement, ce qui lie la gaine au ruban d'acier, et en ce qu'un tube fourreau (3) est formé de manière lâche autour de la fibre ou des fibres, avant l'application du tube d'un seul tenant, par enroulement d'une bande de papier, de plastique ou d'un complexe papier/plastique sous forme d'un tube.

**FIG. I.**

**FIG. 2.**